# DEMANDE DE BREVET EUROPEEN

(11) **EP 1 810 888 A1**
(43) Date de publication de la demande: **25.07.2007**
(21) Numéro de dépôt: 07100449.3
(22) Date de dépôt: 12.01.2007
(51) Int. Cl.: B60R 19/24

(54) **Dispositif de fixation amovible d'un pare-chocs à un vehicule automobile**

(30) Priorité: 19.01.2006 FR 0600505
(71) Demandeur: Peugeot Citroen Automobiles SA, 78943 Vélizy-Villacoublay Cedex (FR)
(72) Inventeur: Stee, Lucien, 91700 Sainte Geneviève des Bois (FR)

(57) **Abrégé**

L'invention concerne un dispositif (1) de fixation amovible d'un pare-chocs (2) à un véhicule automobile, ce dispositif (1) comprenant une pluralité d'organes (30) de fixation du pare-chocs (2) au véhicule, susceptibles d'adopter chacun une position de fixation dans laquelle le pare-chocs (2) est lié au véhicule par ledit organe de fixation (30) et une position de libération dans laquelle le pare-chocs (2) n'est pas lié au véhicule par ledit organe de fixation (30). Il comprend des moyens (32) d'actionnement à distance aptes à déplacer au moins deux organes de fixation (30) de manière conjointe jusqu'à leurs positions de libération respectives.

Le dispositif permet l'accostage à jeu zéro et la tenue du pare-chocs sur une forme quelconque par actionnement de tous les organes de fixation simultanément sans outil ni dégradation des pièces.

## Description

L'invention concerne en général les pare-chocs de véhicule automobile.

Plus précisément, l'invention concerne un dispositif de fixation amovible d'un pare-chocs à un véhicule automobile, ce dispositif étant du type comprenant une pluralité d'organes de fixation du pare-chocs au véhicule, susceptibles d'adopter chacun une position de fixation dans laquelle le pare-chocs est lié au véhicule par ledit organe de fixation et une position de libération dans laquelle le pare-chocs n'est pas lié au véhicule par ledit organe de fixation.

Le document FR-03 08329 décrit un dispositif de fixation des parties latérales en forme de crosse du pare-chocs avant d'un véhicule automobile aux ailes de celui-ci. Le dispositif comprend, pour chaque crosse, un support formé par une plaque latérale solidaire d'une aile du véhicule. Des pattes sont formées sur cette plaque. Des orifices sont ménagés sur une nervure de la crosse du pare-chocs. La nervure vient s'insérer entre la plaque de support et l'aile du véhicule, les pattes s'encliquetant élastiquement dans les orifices. La plaque latérale est fixée à l'aile par l'intermédiaire de deux vis disposées aux deux extrémités de ladite plaque de support.

Pour procéder au démontage d'une crosse du pare-chocs, il faut d'abord dévisser la vis arrière de maintien de la plaque correspondante, et exercer manuellement une pression vers le bas sur l'extrémité accessible de cette plaque. Celle-ci présente une ligne de faiblesse, autour de laquelle la partie arrière de la plaque peut pivoter par rapport à la partie avant, de manière à réaliser le désengagement des pattes hors des orifices. Il est alors possible de retirer le pare-chocs.

Un tel dispositif permet de démonter assez rapidement le pare-chocs. Toutefois, il est quand même nécessaire de retirer la vis arrière de fixation du support avant de pouvoir dégager la crosse du pare-chocs, puis de la revisser avant de remettre en position la crosse de pare-chocs.

Par ailleurs, les pattes sont nécessairement rassemblées d'un seul côté de la ligne de faiblesse et sont disposées forcément dans un même plan.

Dans ce contexte, l'invention vise à proposer un dispositif de fixation qui soit encore plus rapide et plus commode d'utilisation.

A cette fin, l'invention porte sur un dispositif de fixation du type précité, caractérisé en ce qu'il comprend des moyens d'actionnement à distance aptes à déplacer au moins deux organes de fixation de manière conjointe jusqu'à leurs positions de libération respectives.

Le dispositif peut également présenter une ou plusieurs des caractéristiques ci-dessous, considérées individuellement ou selon toutes les combinaisons techniquement possibles :
- les moyens d'actionnement à distance comprennent une même tringle souple passant successivement par tous les organes de fixation ;
- le dispositif comprend des renvois d'angles définissant entre eux des tronçons d'orientations différentes de la tringle souple, les organes de fixation étant répartis le long des différents tronçons de la tringle ;
- la tringle souple comprend des parties d'entraînement des organes de fixation, conformées en créneau, chaque partie d'entraînement s'étendant latéralement par rapport au tronçon de la tringle souple le long duquel est disposé ledit organe de fixation ;
- la tringle souple présente une première extrémité susceptible d'être rigidement fixée à un point fixe et une seconde extrémité opposée à la première susceptible d'être saisie manuellement ;
- la tringle souple est un fil métallique.
- le dispositif comprend :
   . une surface de blocage susceptible d'être formée sur le véhicule automobile,
   . une nervure de fixation susceptible d'être formée sur le pare-chocs,
   . un support susceptible d'être fixé au véhicule et apte à pincer la nervure de fixation du pare-chocs avec la surface de blocage, les organes de fixation fixant de manière amovible la nervure de fixation au support ;
- les organes de fixation sont des pattes formées sur l'un du support et de la nervure de fixation, ces pattes étant engagées en position de fixation dans des orifices ménagés sur l'autre du support et de la nervure de fixation et étant dégagées des orifices en position de libération.

Selon un second aspect, l'invention porte sur un véhicule automobile comprenant deux ailes et un pare-chocs comportant une partie centrale transversale et deux crosses s'étendant sensiblement longitudinalement à partir des extrémités de la partie centrale, au moins une crosse étant fixée sur une des ailes par un dispositif de fixation tel que décrit ci-dessus.

Le véhicule peut également présenter la caractéristique ci-dessous :
- les organes de fixation du dispositif de fixation sont des pattes formées sur le support, ces pattes étant engagées en position de fixation dans des orifices ménagés sur la nervure de fixation du pare-chocs et étant dégagées des orifices en position de libération.

D'autres caractéristiques et avantages de l'invention ressortiront de la description qui en est donnée ci-dessous, à titre indicatif et nullement limitatif, en référence aux figures annexées, parmi lesquelles :
- la figure 1 est une vue en perspective d'une partie latérale d'un pare-chocs susceptible d'être fixé sur le véhicule automobile à l'aide d'un dispositif conforme à l'invention,
- la figure 2 est une vue partielle en coupe brisée du dispositif de fixation selon l'invention, la nervure de fixation formée sur le pare-chocs de la figure 1 étant coupée selon le plan II-II de la figure 1, et
- la figure 3 est une vue partielle en coupe dans un plan vertical du dispositif de fixation, considéré suivant l'incidence des flèches III de la figure 2.

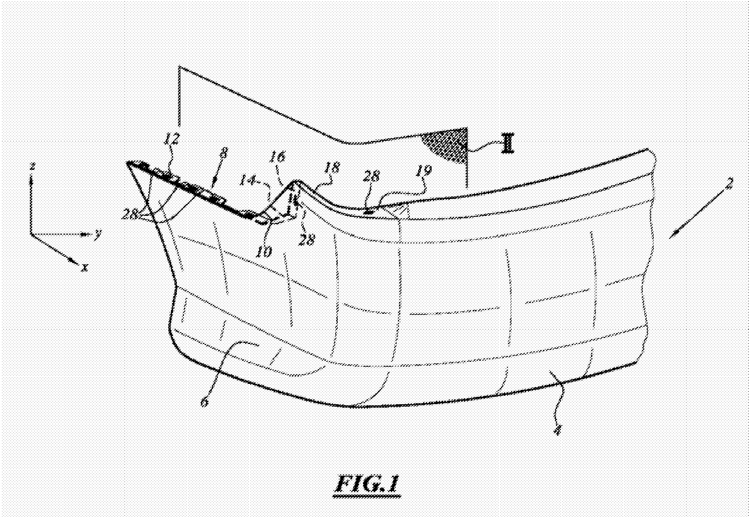

Le dispositif de fixation 1 représenté schématiquement sur la figure 2 est adapté à la fixation d'un pare-chocs avant 2 tel que celui représenté sur la figure 1 aux ailes d'un véhicule automobile.

Le pare-chocs 2 comprend une peau de pare-chocs conformée en une partie centrale transversale 4 disposée à l'avant du véhicule, et deux crosses 6, s'étendant vers l'arrière à partir des deux extrémités latérales opposées de la partie centrale 4. Les crosses 6 s'étendent le long des deux côtés latéraux opposés du véhicule.

La fixation du pare-chocs d'un côté du véhicule va maintenant être décrite ci-dessous, le pare-chocs étant fixé de l'autre côté de la même manière.

Le dispositif de fixation 1 comprend une nervure 8 formée sur le pare-chocs 2. La nervure 8 s'étend vers l'intérieur du véhicule et suit partiellement le profil du bord supérieur 10 du pare-chocs.

Dans l'exemple de réalisation illustré sur la figure 1, la nervure 8 comprend le long de la crosse 6, à partir de l'arrière, un tronçon sensiblement horizontal 12, un tronçon 14 s'étendant vers l'avant et vers le haut en oblique à partir du tronçon 12, un tronçon 16 s'étendant sensiblement verticalement à partir du tronçon 14, et un tronçon 18 prolongeant horizontalement le tronçon 16 vers l'avant. La nervure 8 comprend également un tronçon 19 s'étendant le long de la partie centrale 4 du pare-chocs sensiblement horizontalement, dans le prolongement du tronçon 18.

Les tronçons 12, 18 et 19 sont formés le long du bord 10. Les tronçons 14 et 16 sont formés sur la face du pare-chocs tournée vers l'intérieur du véhicule, à distance du bord 10.

Le dispositif de fixation 1 comprend également un rebord rentrant de fixation 20 présentant un profil sensiblement identique à celui de la nervure 8. Ce rebord 20 est formé sur l'aile 22 et/ou sur d'autres structures du véhicule. Il présente une surface de blocage 24 tournée vers le bas.

Le dispositif de fixation amovible 1 du pare-chocs 2 au véhicule comprend également :
- un support 26 rigidement fixé au rebord de fixation 20 par exemple par des vis ;
- des orifices 28 ménagés dans la nervure 8 ;
- des pattes de blocage 30 formées sur le support 26 et susceptible de s'encliqueter élastiquement dans les orifices 28 ; et
- une tringle souple 32 susceptible d'être actionnée à distance pour désengager plusieurs pattes 30 des orifices 28.

Le support 26 est un profilé à section en L, qui présente sensiblement le même profil que le rebord de fixation 20. Il comprend un pan 27 (figure 2) parallèle à la surface de blocage 24, et qui définit avec celle-ci un interstice 33 dans lequel la nervure 8 du pare-chocs est susceptible de s'insérer.

Les orifices 28 sont répartis le long de la nervure 8. Par exemple, au moins un orifice 28 est ménagé dans chacun des tronçons 12, 16 et 19.

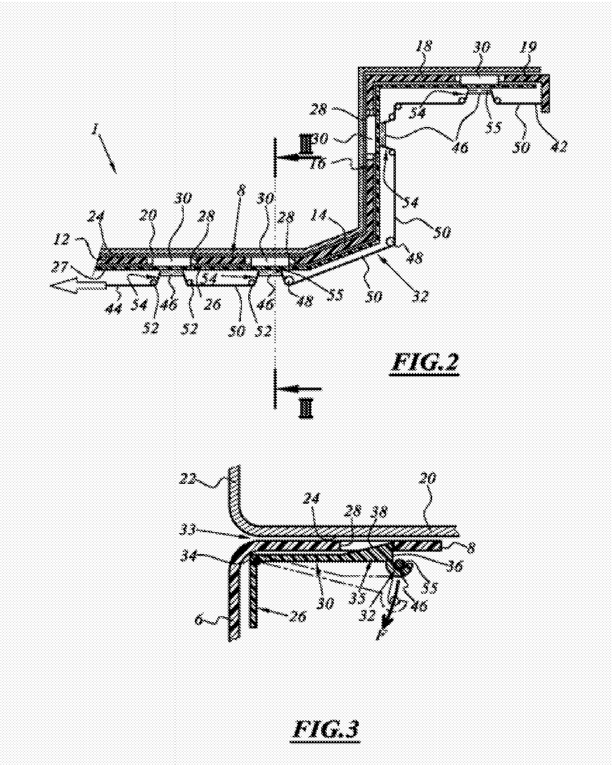

Comme le montrent les figures 2 et 3, les pattes 30 sont venues de matière dans un pan 27 du support parallèle à la surface 24. Chaque patte 30 est par exemple obtenue en réalisant dans le pan 27 deux incisions parallèles, s'étendant sur toute la largeur du pan 27, par exemple perpendiculairement à l'arête 34 de jonction des deux ailes du profilé. Chaque patte est liée au support 26 au niveau de l'arête 34 et est libre à l'opposé de l'arête 34.

Chaque patte 30 comporte sur une face tournée vers la surface 24 un relief de blocage 35. Ce relief 35 est délimité vers l'intérieur du véhicule, c'est-à-dire vers la droite de la figure 3, par une face 36 sensiblement perpendiculaire à la surface 24. Le relief 35 est délimité vers l'extérieur du véhicule, c'est-à-dire vers la gauche de la figure 3, par une face 38 faiblement inclinée par rapport à la surface 24.

Quand la nervure 8 est engagée dans l'interstice 33, chaque patte 30 est en coïncidence avec un orifice 28. La patte 30 occupe alors une position de fixation sensiblement parallèle au rebord 20 (figure 3) dans laquelle le relief 35 de la patte est engagé dans l'orifice 28 correspondant.

La patte 30 est mobile par déformation élastique en rotation autour d'un axe fictif, vers une position de libération représentée sur la figure 3. L'axe correspond sensiblement à l'arête 34, c'est-à-dire au point où la patte 30 se raccorde sur le support 26.

La patte 30 passe de sa position de fixation à sa position de libération par un mouvement selon la flèche F de la figure 3, dans le sens d'un écartement par rapport au rebord 20. Dans la position de libération de la patte 30, le relief 38 est dégagé de l'orifice 28.

Au repos, chaque patte 30 est rappelée élastiquement en position de fixation.

L'écartement entre la surface de blocage 24 et le pan 27 du support correspond sensiblement à l'épaisseur de la nervure 8, de telle sorte que la nervure est pincée entre le pan 27 et la surface 24.

La tringle souple 32 est un fil métallique qui s'étend le long de toute la nervure 8. Le fil s'étend sous la nervure 8. Il est rigidement fixé par une première extrémité 42 au support 26. L'extrémité 42 est située sous une extrémité du tronçon 19 de la nervure. La seconde extrémité 44 du fil est susceptible d'être saisie manuellement. Elle est disposée sous l'extrémité arrière du tronçon 12 de la nervure.

Comme on le voit sur la figure 3, par ailleurs, chaque patte 30 comporte à son extrémité libre une pièce de traction 46 en demi-anneau. La concavité de la pièce 46 est tournée vers le rebord 20. Le fil 32 passe successivement par toutes les pattes 30 et occupe le fond des concavités des pièces 46.

Des renvois 48 sont disposés aux angles entre les différents tronçons 12, 14, 16, 18 et 19 de la nervure 8 (figure 2). Ces renvois 48 servent de pivots pour le fil. Les renvois 48 définissent entre eux des tronçons 50 d'orientations différentes du fil 32. Ils permettent donc à ce fil de suivre le profil de la nervure 8, de telle sorte que les pattes 30 sont disposées le long des différents tronçons du fil 32.

D'autres renvois d'angles 52 sont disposés sur les tronçons 50 du fil, de chaque côté des pattes 30. Ces renvois 52 confèrent au fil une forme de créneau 54 au niveau des pattes 30. Les créneaux 54 s'étendent latéralement par rapport au tronçon 50 le long duquel est disposé la patte 30. Le segment 55 du fil constituant le fond du créneau 54 est disposé dans la concavité de la pièce de traction 46.

Pour monter un côté du pare-chocs 2 sur le véhicule automobile, on fixe d'abord un support 26 à l'aile 22 correspondante du véhicule automobile. Puis, on approche de pare-chocs 2 du véhicule, et on vient engager la nervure 8 dans l'interstice 33 ménagé entre le support 26 et le rebord 20 de l'aile. Cette insertion est effectuée par un mouvement suivant une direction générale sensiblement transversale. En pénétrant entre la surface 24 et le support 26, la nervure 8 glisse sur la face inclinée 38 du relief 35, et fait pivoter la patte 30 autour de l'arête 34 dans le sens de la flèche F de la figure 3. Quand les orifices 28 arrivent au niveau des reliefs 35, les reliefs 35 tombent dans les orifices 28 et les pattes 30 reprennent leur position de fixation. Le côté du pare-chocs est alors rigidement fixé sur le véhicule. En effet, le mouvement du pare-chocs 2 en sens inverse est rendu impossible par le bord de l'orifice 28 qui vient buter contre la face 36 du relief. La nervure 8 ne peut donc pas se déplacer transversalement vers l'extérieur du véhicule. La nervure 8 est par ailleurs pincée entre le pan 27 et la surface de blocage 24 et ne peut pas se dégager des pattes 30 par un mouvement vertical.

Pour démonter le côté du pare-chocs 2 et le séparer de l'aile 22 correspondante du véhicule, un utilisateur saisit l'extrémité 44 du fil 32. Il tire sur le fil 32, de façon à mettre celui-ci en tension. La tension appliquée au fil 32 tend à aplatir les créneaux 54 et à ramener le segment 55 du fil coopérant avec la patte 30 dans l'alignement du tronçon 50 passant par la patte. Les pattes 30 sont en conséquence entraînées vers leurs positions respectives de libération, par l'intermédiaire des pièces de tension 46. Chaque patte 30 se déplace suivant une direction sensiblement perpendiculaire au tronçon 50 du fil passant par ladite patte 30.

Quand la traction sur le fil 32 est suffisante, les pattes 30 atteignent leurs positions de libération respectives, de telle sorte que les reliefs 35 sont dégagés des orifices 28. L'utilisateur peut alors dégager la nervure 8 hors de l'interstice 33 séparant le support 26 du rebord 20. Le côté du pare-chocs est alors libéré. Une fois la nervure 8 dégagée, l'utilisateur relâche le fil 32.

Le côté du pare-chocs peut être de nouveau fixé sur le véhicule en engageant la nervure 8 entre le support 26 et le rebord 20.

Le dispositif de fixation décrit ci-dessus présente donc de multiples avantages.

Pouvoir escamoter toutes les pattes 30 jusqu'à leur position de libération en actionnant la tringle souple 32 permet un démontage rapide et aisé du pare-chocs. Les pattes sont préservées et ne subissent aucune dégradation pendant le démontage du pare-chocs. Le remontage du pare-chocs est également particulièrement facile et rapide, puisque le support 26 reste en place sur le véhicule automobile.

Le dispositif de fixation est particulièrement avantageux dans le cas où certaines pattes sont situées dans une zone rendue inaccessible après montage du pare-chocs ou après montage d'autres pièces telles que le pare-boue, le bidon lave-glace, des tuyaux, des fils électriques, le klaxon, les projecteurs du véhicule, etc .... Il suffit que l'extrémité du fil reste accessible de chaque côté du pare-chocs pour pouvoir réaliser le démontage.

Les pattes 30 ne sont pas nécessairement alignées. Quelles que soient leurs positions, elles peuvent être actionnées simultanément grâce aux renvois d'angle disposés le long du fil.

Par ailleurs, le dispositif peut présenter de multiples variantes.

La tringle souple 32 peut être non pas un fil métallique, mais plutôt un câble en matière plastique, ou une corde tressée en fibres végétales, ou tout autre lien présentant une résistance mécanique suffisante pour déplacer les pattes 30 jusqu'à leur position de libération.

La partie de tension 46 peut être un anneau complet et non pas un demi-anneau, ou peut présenter toute autre forme adaptée.

Les pattes 30 peuvent être réalisées non pas sur un support 26 rigidement fixée à l'aile 22 du véhicule, mais plutôt être formées directement sur le rebord 20 de l'aile 22, les orifices 28 étant, dans ce cas, formés sur la nervure 8 du pare-chocs.

Par ailleurs, il est possible également de former les pattes 30 sur la nervure 8 du pare-chocs, et de former les orifices 28 soit sur le support 26, soit sur le rebord 20 de l'aile.

La nervure 8 peut présenter de multiples formes et peut par exemple suivre le bord supérieur du pare-chocs.

Les pattes 30 peuvent être liées au support 26 par leurs extrémités opposées à l'arête 34, le relief 35 et la pièce de traction 46 étant disposées à l'extrémité de la patte 30 tournée vers l'arête 34.

## Revendications

1. Dispositif (1) de fixation amovible d'un pare-chocs (2) à un véhicule automobile, ce dispositif (1) comprenant une pluralité d'organes (30) de fixation du pare-chocs (2) au véhicule, susceptibles d'adopter chacun une position de fixation dans laquelle le pare-chocs (2) est lié au véhicule par ledit organe de fixation (30) et une position de libération dans laquelle le pare-chocs (2) n'est pas lié au véhicule par ledit organe de fixation (30),
**caractérisé en ce qu'**il comprend des moyens (32) d'actionnement à distance aptes à déplacer au moins deux organes de fixation (30) de manière conjointe jusqu'à leurs positions de libération respectives.

2. Dispositif selon la revendication 1, **caractérisé en ce que** les moyens d'actionnement à distance comprennent une même tringle souple (32) passant successivement par tous les organes de fixation (30).

3. Dispositif selon la revendication 2, **caractérisé en ce qu'**il comprend des renvois d'angles (48) définissant entre eux des tronçons (50) d'orientations différentes de la tringle souple (32), les organes de fixation (30) étant répartis le long des différents tronçons (50) de la tringle (32).

4. Dispositif selon la revendication 3, **caractérisé en ce que** la tringle souple (32) comprend des parties (54) d'entraînement des organes de fixation (30), conformées en créneau, chaque partie d'entraînement (54) s'étendant latéralement par rapport au tronçon (50) de la tringle souple (32) le long duquel est disposé ledit organe de fixation (30).

5. Dispositif selon l'une quelconque des revendications 2 à 4, **caractérisé en ce que** la tringle souple (32) présente une première extrémité (42) susceptible d'être rigidement fixée à un point fixe et une seconde extrémité (44) opposée à la première susceptible d'être saisie manuellement.

6. Dispositif selon l'une quelconque des revendications 2 à 5, **caractérisé en ce que** la tringle souple (32) est un fil métallique.

7. Dispositif selon l'une quelconque des revendications 1 à 6, **caractérisé en ce qu'**il comprend :
- une surface de blocage (24) susceptible d'être formée sur le véhicule automobile,
- une nervure (8) de fixation susceptible d'être formée sur le pare-chocs (2),
- un support (26) susceptible d'être fixé au véhicule et apte à pincer la nervure de fixation (8) du pare-chocs (2) avec la surface de blocage (24), les organes de fixation (30) fixant de manière amovible la nervure de fixation (8) au support (26).

8. Dispositif selon la revendication 7, **caractérisé en ce que** les organes de fixation sont des pattes (30) formées sur l'un du support (26) et de la nervure de fixation (8), ces pattes (30) étant engagées en position de fixation dans des orifices (28) ménagés sur l'autre du support (26) et de la nervure de fixation (8) et étant dégagées des orifices (28) en position de libération.

9. Véhicule automobile comprenant deux ailes (22) et un pare-chocs (2) comportant une partie centrale transversale (4) et deux crosses (6) s'étendant sensiblement longitudinalement à partir des extrémités de la partie centrale (4), au moins une crosse (6) étant fixée sur une des ailes (22) par un dispositif de fixation (1) selon l'une quelconque des revendications 7 et 8.

10. Véhicule selon la revendication 9, **caractérisé en ce que** les organes de fixation (30) du dispositif de fixation (1) sont des pattes (30) formées sur le support (26), ces pattes (30) étant engagées en position de fixation dans des orifices (28) ménagés sur la nervure (8) de fixation du pare-chocs (2) et étant dégagées des orifices (28) en position de libération.
